# EUROPÄISCHE PATENTSCHRIFT

(11) **EP 4 283 276 B1**
(45) Veröffentlichungstag und Bekanntmachung des Hinweises auf die Patenterteilung: **09.12.2026**
(21) Anmeldenummer: 23173888.1
(22) Anmeldetag: 17.05.2023
(51) Int. Cl.: G01M 15/12, G01M 15/04

(54) **DIAGNOSEVERFAHREN FÜR EIN FAHRZEUG**
DIAGNOSTIC METHOD FOR A VEHICLE
PROCÉDÉ DE DIAGNOSTIC POUR VÉHICULE

(30) Priorität: 25.05.2022 DE 102022113281
(43) Veröffentlichungstag der Anmeldung: 29.11.2023
(73) Patentinhaber: VOLKSWAGEN AG, 38440 Wolfsburg (DE)
(72) Erfinder: Hein, Dr. Sven Moritz, 30163 Hannover (DE); Gottschalk, Prof. Dr. Wolfram, 39122 Magdeburg (DE)
(74) Vertreter: Bals & Vogel Patentanwälte PartGmbB

(56) Entgegenhaltungen:
- DE-A1- 102010 041 889
- DE-A1- 102018 118 320
- JP-A- H11 201 810

## Beschreibung

Die vorgestellte Erfindung betrifft ein Diagnoseverfahren zur Diagnose eines fehlerhaften, d.h. eines von der Erwartung eines Fahrers bzw. einer vorgegebenen Norm abweichenden Schwingungsverhaltens eines sich drehenden Bauteils, bspw. im Antriebsstrang, eines Fahrzeugs und ein Fahrzeug.

In einem Fahrzeug treten Schwingungen im Antriebsstrang auf, die entweder durch Anregung von außen, bspw. aufgrund der Fahrbahnbeschaffenheit, oder von innen, bspw. durch Umschaltung von Motorbetriebsparametern oder Zu- bzw. Abschaltung einer Last, erzeugt werden können. Diese Schwingungen führen zu einem unerwünschten Fahrverhalten, das sich je nach Frequenz der Anregung als "Ruck", d.h. als spürbarer Beschleunigungswechsel, als "Rasseln", d.h. als vom Fahrer bzw. Beifahrern bemerkbarer Körperschall, oder als akustische Auffälligkeit, wie bspw. "Brummen" bzw. hörbarer Schall, äußert.

Insbesondere zur Applikation bzw. Kalibration von Motor- und Antriebsstrangparametern ist eine schnelle, automatisierte und quantifizierende Bewertung solcher Schwingungen notwendig, um auf Basis großer Datenmengen an Messungen zu einer optimalen Bedatung zu kommen. Üblicherweise werden Ableitungen relevanter Drehzahlen, wie bspw. Raddrehzahlen oder Motordrehzahlen, für eine solche Messung verwendet. Die zweite Ableitung der Drehzahl wird als Maß für einen sog. Ruck verwendet, da sie mit einer Beschleunigungsänderung korrespondiert. Auch Frequenzanalysen auf Basis einer Fouriertransformation und Betrachtung der Amplitude relevanter Frequenzkomponenten sind übliche Maßnahmen zur Bewertung von Schwingungen.

Eine Bewertung von Antriebsstrangschwingungen auf Basis von Ableitungen hat verschiedene Nachteile. Zum einen liegt ein Basis-Signal verrauscht vor. Das Ableiten einer Größe verkleinert das Signal-zu-Rausch-Verhältnis und erschwert die Bewertung, je häufiger abgeleitet wird. Zum anderen wird eine Ableitung lediglich an einem bestimmten Zeitpunkt gebildet, sodass eine Betrachtung über einen Zeitbereich nicht möglich ist.

Wird auf Basis einer Fouriertransformation die Antriebsstrangschwingung bewertet, ist ein Nachteil, dass immer ein Kompromiss zwischen zeitlicher Auflösung und Auflösung im Frequenzraum gefunden werden muss. Zusätzlich gilt auch hier, dass die Länge einer Störung nicht direkt betrachtet werden kann.

DE 10 2018 118 320 A1 beschreibt ein Verfahren zum Erkennen einer Veränderung am Betriebsverhalten eines Kurbeltriebs eines Kraftfahrzeugs.

Im Rahmen der vorgestellten Erfindung werden ein Diagnoseverfahren und ein Fahrzeug vorgestellt. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Diagnoseverfahren beschrieben sind, selbstverständlich auch im Zusammenhang mit dem erfindungsgemäßen Fahrzeug und jeweils umgekehrt, sodass bezüglich der Offenbarung zu den einzelnen Erfindungsaspekten stets wechselseitig Bezug genommen wird bzw. werden kann.

Es ist somit eine Aufgabe der vorgestellten Erfindung, eine Möglichkeit zur genauen und verlässlichen Diagnose eines u.U. fehlerhaften, d.h. von der Erwartung bzw. Norm abweichenden Schwingungsverhaltens eines sich drehenden Bauteils eines Fahrzeugs bereitzustellen.

Es wird somit gemäß einem ersten Aspekt der vorgestellten Erfindung ein Diagnoseverfahren zur Diagnose eines u.U. fehlerhaften Schwingungsverhaltens eines sich drehenden Bauteils eines Fahrzeugs vorgestellt. Das Diagnoseverfahren umfasst das Ermitteln einer Drehzahl, mit der sich das Bauteil dreht, das Berechnen mindestens eines gefilterten Drehzahlbandes von Messwerten der Drehzahl mittels mindestens eines mathematischen Filters, das Berechnen einer Kennzahl des Schwingungsverhaltens des Bauteils durch Integrieren des gefilterten Drehzahlbandes über die Zeit und das Ausgeben einer Warnmeldung für den Fall, dass die Kennzahl über einem vorgegebenen Schwellenwert liegt.

Unter einem Bauteil ist im Kontext der vorgestellten Erfindung insbesondere ein Bauteil eines Antriebsstrangs, wie bspw. eine Achse oder eine Antriebswelle, zu verstehen.

Das vorgestellte Diagnoseverfahren basiert darauf, dass ein vorgegebenes Drehzahlband, das bewertet werden soll, zunächst durch ein Bandpassfiltert gefiltert wird, sodass durch eine untere Frequenzschranke die von einem Fahrer gewünschten bzw. aktiv ausgelösten langsamen Drehzahländerungen herausgefiltert werden, da diese nicht in die Diagnose einfließen sollen.

Eine obere Frequenzschranke ist derart gewählt, dass nur Frequenzen verwendet werden, die einen untereinander vergleichbaren Einfluss auf das Fahrverhalten haben. Bspw. können für Schwingungen, die als Ruckeln, Rasseln oder Brummen wahrgenommen werden, jeweils eigene untere und/oder obere Frequenzschranken definiert sein.

Durch einen Abgleich der erfindungsgemäß vorgesehenen Kennzahl mit einem Schwellenwert kann automatische eine Warnmeldung ausgegeben werden, wenn bspw. eine besonders starke und/oder lange Schwingung auftritt. Anhand der Warnmeldung kann der Antriebsstrang bspw. derart eingestellt werden, dass die Kennzahl minimiert wird.

Es kann vorgesehen sein, dass die Kennzahl anhand einer auf Grundlage des mindestens einen gefilterten Drehzahlbands ermittelten spezifischen kinetischen Energie berechnet wird, wobei zur Berechnung der Kennzahl die spezifische kinetische Energie über einen vorgegebenen Zeitraum integriert wird.

Auf Basis eines jeweiligen gefilterten Drehzahlbandes wird die kinetische Energie in der Schwingung des Antriebsstrangs auf Grundlage der folgenden Annahmen ermittelt:
E_kin=2π ∫M n dt, wobei M ein anliegendes bzw. übertragenes Drehmoment angibt.

Da M=2π J dn/dt gilt, mit J, dem Trägheitsmoment, kann eine spezifische kinetische Energie E_kin/J=4 π ² ∫n dn/dt dt=2 π ² n² berechnet werden. Diese Größe wird ein weiteres Mal integriert, um eine spezifische Wirkung unter o.g. Berücksichtigung der Anlagedauer des jeweiligen Frequenzphänomens zu erhalten: S=2 π ² ∫n² dt. Entsprechend ist S eine Kennzahl zur Bewertung einer Antriebsstrangschwingung.

Wenn die Integrationsgrenzen vor bzw. nach dem Einleiten einer jeweiligen Schwingung des Antriebsstrangs gesetzt werden, steigt ein Wert der Kennzahl S sowohl bei höherer Schwingungsamplitude als auch bei einer längeren Dauer der Schwingung. Solange keine Schwingung anliegt, bleibt der Wert der Kennzahl S minimal. Die Berechnung der Kennzahl S quantifiziert daher sowohl Stärke als auch Dauer einer Antriebsstrangschwingung im jeweiligen spezifischen Frequenzband. Entsprechend ist das vorgestellte Diagnoseverfahren besonders gut geeignet, wenn eine Phase bzw. ein Zeitbereich, in der bzw. dem eine jeweilige Schwingung zu erwarten ist, bekannt ist. Der Zeitbereich kann bspw. einige Sekunden oder einige Minuten umfassen.

Der Beginn und das Ende eines solchen Zeitbereichs können dann als Integrationsgrenzen verwendet werden und dadurch eine Vergleichbarkeit verschiedener Schwingungsvorgänge liefern. Der Fokus auf den kinetischen Anteil der Energie ist dabei sinnvoll, da nur dieser durch eine Bewegung des Fahrzeugs vom Fahrer wahrgenommen werden kann. Potentielle Energie, bspw. in Form von quasistationären Verspannungen im Antriebsstrang, sind für den Fahrer nicht direkt wahrnehmbar.

Es kann weiterhin vorgesehen sein, dass die Messwerte während einer Umschaltphase beim Umschalten des Fahrzeugs von einer ersten Betriebsart auf eine zweite Betriebsart ermittelt werden.

Da beim Umschalten von einer ersten Betriebsart auf eine zweite Betriebsart, wie bspw. von einer ersten Übersetzungsstufe auch eine zweite Übersetzungsstufe, in der Regel Schwingungen in einen Antriebsstrang eingekoppelt werden, eignet sich eine Betrachtung von beim Umschalten des Fahrzeugs von einer ersten Betriebsart auf eine zweite Betriebsart ermittelten Messewerten besonders vorteilhaft zur Diagnose eines fehlerhaften bzw. eines korrekten Schwingungsverhaltens des Antriebsstrangs. Dazu können jeweilige Integrationsgrenzen unmittelbar nach einer Deaktivierung der ersten Betriebsart und unmittelbar vor einer Aktivierung der zweiten Betriebsart gesetzt werden.

Es kann weiterhin vorgesehen sein, dass eine Vielzahl gefilterter Drehzahlbänder mittels einer Vielzahl mathematischer Filter berechnet werden.

Durch Verwendung einer Vielzahl gefilterter Drehzahlbänder können jeweilige Kennzahlen für die jeweiligen Drehzahlbänder ermittelt werden, sodass verschiedene Typen von Schwingungen, wie bspw. Ruckeln, Rasseln oder Brummen unabhängiger voneinander identifiziert, quantifiziert und entsprechend bewertet werden können.

Es kann vorgesehen sein, dass das sich drehende Bauteil ein Teil eines Antriebsstrangs eines durch bspw. einen Verbrennungsmotor angetriebenen Fahrzeugs ist und der Verbrennungsmotor und/oder der Antriebsstrang in Abhängigkeit der Kennzahl eingestellt, d.h. daraufhin kalibriert wird.

Durch ein Einstellen bspw. des Verbrennungsmotors und/oder des Antriebsstrangs in Abhängigkeit der Kennzahl kann ggf. die Kennzahl automatisch minimiert und, dadurch bedingt, ein Ruckeln, Rasseln oder Brummen minimiert werden.

Gemäß einem zweiten Aspekt betrifft die vorgestellte Erfindung ein Fahrzeug. Das vorgestellte Fahrzeug umfasst einen Antriebsstrang und eine Recheneinheit. Die Recheneinheit ist dazu konfiguriert, eine mögliche Ausgestaltung des vorgestellten Diagnoseverfahrens auszuführen.

Die erfindungsgemäß vorgesehene Recheneinheit kann bspw. ein Prozessor, ein Steuergerät oder jeder weitere programmierbare Schaltkreis sein.

Es kann vorgesehen sein, dass die Recheneinheit dazu konfiguriert ist, eine Drehzahl zu ermitteln, mit der sich ein Bauteil des Antriebsstrangs dreht, mindestens ein gefiltertes Drehzahlband von Messwerten der Drehzahl mittels mindestens eines mathematischen Filters zu berechnen, eine Kennzahl eines Schwingungsverhaltens des Bauteils durch Integrieren des gefilterten Drehzahlbandes über die Zeit zu berechnen und eine Warnmeldung auszugeben für den Fall, dass die Kennzahl über einem vorgegebenen Schwellenwert liegt.

Durch das automatische Ausgeben einer Warnmeldung, auf bspw. einer Ausgabeeinheit des Fahrzeugs, kann ein Fahrer des Fahrzeugs und/oder ein Techniker über ein fehlerhaftes Schwingungsverhalten des Antriebsstrangs des Fahrzeugs informiert werden.

Es kann weiterhin vorgesehen sein, dass die Recheneinheit dazu konfiguriert ist, die Kennzahl anhand einer auf Grundlage des mindestens einen gefilterten Drehzahlbands ermittelten spezifischen kinetischen Energie zu berechnen, und zur Berechnung der Kennzahl die spezifische kinetische Energie über einen vorgegebenen Zeitraum zu integrieren.

Durch Betrachtung der kinetischen Energie in einem jeweiligen Frequenzband über einen vorgegebenen Zeitraum wird ein besonders verlässliches Maß über einen Zustand bzw. ein Verhalten des Antriebsstrangs des vorgestellten Fahrzeugs bereitgestellt.

Es kann weiterhin vorgesehen sein, dass die Recheneinheit dazu konfiguriert ist, die Messwerte während einer Umschaltphase beim Umschalten des Fahrzeugs von einer ersten Betriebsart auf eine zweite Betriebsart zu ermitteln.

Da besonders beim Umschalten zwischen jeweiligen Betriebsarten eines Fahrzeugs mechanisch bedingte Schwingungen auftreten, eignet sich ein Umschaltvorgang besonders vorteilhaft zum Beurteilen eines Schwingungsverhaltens, d. h. eines Verhaltens des Antriebsstrangs in Reaktion auf ein Einkoppeln von Schwingungen.

Es kann weiterhin vorgesehen sein, dass die Recheneinheit dazu konfiguriert ist, eine Vielzahl gefilterter Drehzahlbänder mittels einer Vielzahl mathematischer Filter zu berechnen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine mögliche Ausgestaltung des vorgestellten Diagnoseverfahrens,
- Figur 2: eine mögliche Ausgestaltung des vorgestellten Fahrzeugs.

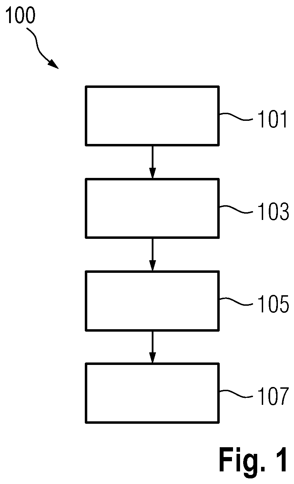

In Figur 1 ist ein Diagnoseverfahren 100 dargestellt. Das Diagnoseverfahren 100 umfasst einen Ermittlungsschritt 101, bei dem eine Drehzahl mit der sich ein Bauteil eines Antriebsstrangs eines Fahrzeugs dreht, ermittelt wird.

Ferner umfasst das Diagnoseverfahren 100 einen ersten Berechnungsschritt 103, bei dem mindestens ein gefiltertes Drehzahlband von Messwerten der Drehzahl mittels mindestens eines mathematischen Filters berechnet wird, einen zweiten Berechnungsschritt 105, bei dem eine Kennzahl des Schwingungsverhaltens des Bauteils durch Integrieren des mindestens einen gefilterten Drehzahlbandes über die Zeit berechnet wird, und einen Ausgabeschritt 107, bei dem eine Warnmeldung für den Fall auf einer Ausgabeeinheit ausgegeben wird, dass die Kennzahl über einem vorgegebenen Schwellenwert liegt.

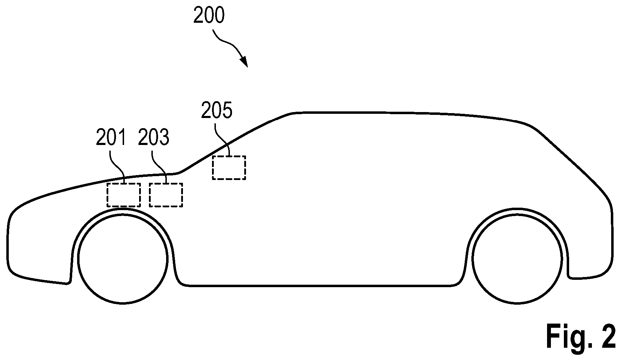

In Figur 2 ist ein Fahrzeug 200 dargestellt. Das Fahrzeug 200 umfasst einen Antriebsstrang 201 und eine Recheneinheit 203.

Die Recheneinheit 203 ist dazu konfiguriert eine Drehzahl zu ermitteln, mit der sich ein Bauteil des Antriebsstrangs 201 dreht, mindestens ein gefiltertes Drehzahlband von Messwerten der Drehzahl mittels mindestens eines mathematischen Filters zu berechnen, eine Kennzahl eines Schwingungsverhaltens des Bauteils durch Integrieren des gefilterten Drehzahlbandes über die Zeit zu berechnen und eine Warnmeldung auf einer optionalen Ausgabeeinheit 205 in Form einer Anzeige auszugeben für den Fall, dass die Kennzahl über einem vorgegebenen Schwellenwert liegt.

### Bezugszeichenliste

- 100: Diagnoseverfahren
- 101: Ermittlungsschritt
- 103: erster Berechnungsschritt
- 105: zweiter Berechnungsschritt
- 107: Ausgabeschritt
- 200: Fahrzeug
- 201: Antriebsstrang
- 203: Recheneinheit
- 205: Ausgabeeinheit

## Patentansprüche

1. Computerimplementiertes Diagnoseverfahren (100) zur Diagnose eines fehlerhaften Schwingungsverhaltens eines sich drehenden Bauteils eines Fahrzeugs (200),
wobei das Diagnoseverfahren (100) umfasst:
- Ermitteln (101) einer Drehzahl mit der sich das Bauteil dreht,
- Berechnen (103) mindestens eines gefilterten Drehzahlbandes von Messwerten der Drehzahl mittels mindestens eines mathematischen Filters,
- Berechnen (105) einer Kennzahl des Schwingungsverhaltens des Bauteils durch Integrieren des mindestens einen gefilterten Drehzahlbandes über die Zeit,
- Ausgeben (107) einer Warnmeldung für den Fall, dass die Kennzahl über einem vorgegebenen Schwellenwert liegt,
**dadurch gekennzeichnet,**
**dass** die Messwerte während einer Umschaltphase beim Umschalten des Fahrzeugs (200) von einer ersten Betriebsart auf eine zweite Betriebsart ermittelt werden.

2. Diagnoseverfahren (100) nach Anspruch 1,
**dadurch gekennzeichnet,**
**dass** die Kennzahl anhand einer auf Grundlage des mindestens einen gefilterten Drehzahlbands ermittelten spezifischen kinetischen Energie berechnet wird, wobei zur Berechnung der Kennzahl die spezifische kinetische Energie über einen vorgegebenen Zeitraum integriert wird.

3. Diagnoseverfahren (100) nach Anspruch 1,
**dadurch gekennzeichnet,**
**dass** eine Vielzahl gefilterter Drehzahlbänder mittels einer Vielzahl mathematischer Filter berechnet werden.

4. Diagnoseverfahren (100) nach Anspruch 1,
**dadurch gekennzeichnet,**
**dass** das sich drehende Bauteil ein Teil eines Antriebsstrangs (201) eines durch einen Verbrennungsmotor angetriebenen Fahrzeugs (200) ist und der Verbrennungsmotor und/oder der Antriebsstrang (201) in Abhängigkeit der Kennzahl eingestellt wird.

5. Fahrzeug (200),
wobei das Fahrzeug (200) umfasst:
- einen Antriebsstrang (201),
- eine Recheneinheit (203),
wobei die Recheneinheit (203) dazu konfiguriert ist, ein Diagnoseverfahren (100) nach einem der Ansprüche 1 bis 4 auszuführen.

6. Fahrzeug (200) nach Anspruch 5,
**dadurch gekennzeichnet,**
**dass** die Recheneinheit (203) dazu konfiguriert ist:
- eine Drehzahl zu ermitteln, mit der sich ein Bauteil des Antriebsstrangs (201) dreht,
- mindestens ein gefiltertes Drehzahlband von Messwerten der Drehzahl mittels mindestens eines mathematischen Filters zu berechnen,
- eine Kennzahl eines Schwingungsverhaltens des Bauteils durch Integrieren des gefilterten Drehzahlbandes über die Zeit zu berechnen,
- eine Warnmeldung auszugeben für den Fall, dass die Kennzahl über einem vorgegebenen Schwellenwert liegt,
**dadurch gekennzeichnet,**
**dass** die Recheneinheit (203) dazu konfiguriert ist, die Messwerte während einer Umschaltphase beim Umschalten des Fahrzeugs (200) von einer ersten Betriebsart auf eine zweite Betriebsart zu ermitteln.

7. Fahrzeug (200) nach Anspruch 5 oder 6,
**dadurch gekennzeichnet,**
**dass** die Recheneinheit (203) dazu konfiguriert ist, die Kennzahl anhand einer auf Grundlage des mindestens einen gefilterten Drehzahlbands ermittelten spezifischen kinetischen Energie zu berechnen, und zur Berechnung der Kennzahl die spezifische kinetische Energie über einen vorgegebenen Zeitraum zu integrieren.

8. Fahrzeug (200) nach einem der Ansprüche 5 bis 7,
**dadurch gekennzeichnet,**
**dass** die Recheneinheit (203) dazu konfiguriert ist, eine Vielzahl gefilterter Drehzahlbänder mittels einer Vielzahl mathematischer Filter zu berechnen.

## Claims

1. Computer-implemented
diagnostic method (100) for diagnosing faulty vibration behavior of a rotating component of a vehicle (200),
the diagnostic method (100) comprising:
- determining (101) the rotational speed at which the component rotates,
- calculating (103) at least one filtered rotational speed band of measured values of the rotational speed by means of at least one mathematical filter,
- calculating (105) a characteristic value of the vibration behavior of the component by integrating the at least one filtered rotational speed band over time,
- outputting (107) a warning message if the characteristic value exceeds a predefined threshold,
**characterized in that**
the measured values are determined during a switching phase when the vehicle (200) switches from a first operating mode to a second operating mode.

2. Diagnostic method (100) according to claim 1,
**characterized in that**
the characteristic value is calculated based on a specific kinetic energy determined on the basis of the at least one filtered rotational speed band, the specific kinetic energy being integrated over a predefined period in order to calculate the characteristic value.

3. Diagnostic method (100) according to claim 1,
**characterized in that**
a plurality of filtered rotational speed bands are calculated by means of a plurality of mathematical filters.

4. Diagnostic method (100) according to claim 1,
**characterized in that**
the rotating component is part of a drivetrain (201) of a vehicle (200) driven by an internal combustion engine and the internal combustion engine and/or the drivetrain (201) is adjusted depending on the characteristic value.

5. Vehicle (200),
wherein the vehicle (200) comprises:
- a drivetrain (201),
- a computing unit (203),
wherein the computing unit (203) is configured to carry out a diagnostic method (100) according to any of claims 1 to 4.

6. Vehicle (200) according to claim 5,
**characterized in that**
the computing unit (203) is configured to:
- determine the rotational speed at which a component of the drivetrain (201) rotates,
- calculate at least one filtered rotational speed band of measured values of the rotational speed by means of at least one mathematical filter,
- calculate a characteristic value of the vibration behavior of the component by integrating the filtered rotational speed band over time,
- output a warning message if the characteristic value exceeds a predefined threshold,
**characterized in that**
the computing unit (203) is configured to determine the measured values during a switching phase when the vehicle (200) switches from a first operating mode to a second operating mode.

7. Vehicle (200) according to claim 5 or claim 6,
**characterized in that**
the computing unit (203) is configured to calculate the characteristic value based on a specific kinetic energy determined on the basis of the at least one filtered rotational speed band, and to integrate the specific kinetic energy over a predefined period in order to calculate the characteristic value.

8. Vehicle (200) according to any of claims 5 to 7,
**characterized in that**
the computing unit (203) is configured to calculate a plurality of filtered rotational speed bands by means of a plurality of mathematical filters.

## Revendications

1. Procédé de diagnostic (100) mis en œuvre par ordinateur permettant de diagnostiquer un comportement vibratoire défaillant d'un
composant en rotation d'un véhicule (200),
dans lequel le procédé de diagnostic (100) comprend :
- la détermination (101) d'une vitesse de rotation à laquelle le composant tourne,
- le calcul (103) d'au moins une bande de vitesse de rotation filtrée à partir de valeurs de mesure de la vitesse de rotation à l'aide d'au moins un filtre mathématique,
- le calcul (105) d'un paramètre du comportement vibratoire du composant par intégration dans le temps de l'au moins une bande de vitesse de rotation filtrée,
- l'émission (107) d'un message d'avertissement si le paramètre dépasse une valeur seuil prédéfinie,
**caractérisé en ce**
**que** les valeurs de mesure sont déterminées pendant une phase de commutation lors de la commutation du véhicule (200) d'un premier mode de fonctionnement vers un second mode de fonctionnement.

2. Procédé de diagnostic (100) selon la revendication 1,
**caractérisé en ce**
**que** le paramètre est calculé à partir d'une énergie cinétique spécifique déterminée sur la base de l'au moins une bande de vitesse de rotation filtrée, dans lequel l'énergie cinétique spécifique est intégrée sur une période de temps prédéfinie pour le calcul du paramètre.

3. Procédé de diagnostic (100) selon la revendication 1,
**caractérisé en ce**
**qu'**une pluralité de bandes de vitesse de rotation filtrées sont calculées à l'aide d'une pluralité de filtres mathématiques.

4. Procédé de diagnostic (100) selon la revendication 1,
**caractérisé en ce**
**que** le composant en rotation fait partie d'une chaîne cinématique (201) d'un véhicule (200) entraîné par un moteur à combustion interne, et le moteur à combustion interne et/ou la chaîne cinématique (201) sont réglés en fonction du paramètre.

5. Véhicule (200),
dans lequel le véhicule (200) comprend :
- une chaîne cinématique (201),
- une unité de calcul (203),
dans lequel l'unité de calcul (203) est configurée pour réaliser un procédé de diagnostic (100) selon l'une des revendications 1 à 4.

6. Véhicule (200) selon la revendication 5,
**caractérisé en ce**
**que** l'unité de calcul (203) est configurée pour
- déterminer une vitesse de rotation à laquelle un composant de la chaîne cinématique (201) tourne,
- calculer au moins une bande de de vitesse de mesure filtrée à partir de valeurs de mesure de la vitesse de rotation à l'aide d'au moins un filtre mathématique,
- calculer un paramètre d'un comportement vibratoire du composant par intégration dans le temps de la bande de vitesse de rotation filtrée,
- émettre un message d'avertissement si le paramètre dépasse une valeur seuil prédéfinie,
**caractérisé en ce**
**que** l'unité de calcul (203) est configurée pour déterminer les valeurs de mesure pendant une phase de commutation lors de la commutation du véhicule (200) d'un premier mode de fonctionnement vers un second mode de fonctionnement.

7. Véhicule (200) selon la revendication 5 ou 6,
**caractérisé en ce**
**que** l'unité de calcul (203) est configurée pour calculer le paramètre à l'aide d'une énergie cinétique spécifique déterminée sur la base de l'au moins une bande de vitesse de rotation filtrée, et pour intégrer l'énergie cinétique spécifique sur une période de temps prédéfinie pour le calcul du paramètre.

8. Véhicule (200) selon l'une des revendications 5 à 7,
**caractérisé en ce**
**que** l'unité de calcul (203) est configurée pour calculer une pluralité de bandes de vitesse de rotation filtrées à l'aide d'une pluralité de filtres mathématiques.
